# EUROPÄISCHE PATENTSCHRIFT

(11) **EP 2 147 046 B1**
(45) Veröffentlichungstag und Bekanntmachung des Hinweises auf die Patenterteilung: **03.07.2013**
(21) Anmeldenummer: 08750031.0
(22) Anmeldetag: 05.05.2008
(51) Int. Cl.: C08K 3/30, C08J 3/22, D01F 1/10

(54) **BARIUMSULFAT ENTHALTENDER KUNSTSTOFF**
PLASTIC CONTAINING BARIUM SULFATE
MATIÈRE PLASTIQUE CONTENANT DU SULFATE DE BARYUM

(30) Priorität: 04.05.2007 DE 102007021527
(43) Veröffentlichungstag der Anmeldung: 27.01.2010
(73) Patentinhaber: Sachtleben Chemie GmbH, 47198 Duisburg (DE)
(72) Erfinder: FRITZEN, Petra, 47443 Moers (DE); GROTHE, Sonja, 46244 Bottrop (DE)
(74) Vertreter: Uppena, Franz
(86) Internationale Anmeldenummer: PCT/EP2008/055469
(87) Internationale Veröffentlichungsnummer: WO 2008/135545

(56) Entgegenhaltungen:
- EP-A- 0 335 159
- EP-A- 0 362 623
- WO-A-2008/023074
- DE-A1- 19 545 289
- DE-A1- 19 734 666
- DE-A1- 19 907 831
- US-A1- 2003 113 490

## Beschreibung

Gegenstand der vorliegenden Erfindung ist ein Bariumsulfat enthaltender Kunststoff, dessen Herstellung und dessen Verwendung.

Dabei wird als Kunststoff im Sinne der Erfindung ein Material verstanden, dessen Grundbestandteil ein Polymer oder ein Gemisch aus mindestens zwei Polymeren ist.

Insbesondere Gegenstand der vorliegenden Erfindung ist ein Bariumsulfat enthaltender Kunststoff, dessen Grundbestandteil ein teilkristallines Polymer ist, die Herstellung dieses Kunststoffs und dessen Verwendung.

Die physikalischen Eigenschaften von teilkristallinen Polymeren wie Polyethylen (PE), Polypropylen (PP), Polyamiden (PA) oder Polyethylenterephthalat (PET) werden wesentlich durch ihren kristallinen Aufbau bestimmt. Bei der Verarbeitung von teilkristallinen Polymeren, beispielsweise beim Spritzguss, bestimmt das Kristallisationsverhalten die Produktivität des Prozessschrittes. Um das Kristallisationsverhalten von teilkristallinen Polymeren zu beeinflussen, werden so genannte Nukleierungsmittel eingesetzt.

In der EP-A-215364 werden als Nukleierungsmittel inerte anorganische Mineralien, inerte Metalloxide oder andere inerte Metallsalze, beispielsweise Kalk, Talkum, Glimmer, Kaolin, Silikate, Alumosilikate, Titandioxid, Zirkonoxid oder Bariumsulfat offenbart. Diese anorganischen Nukleierungsmittel sind allerdings wenig wirksam und müssen deshalb in vergleichsweise hohen Mengen eingesetzt werden. Die EP-A-215364 offenbart außerdem den Einsatz von Alkalisalzen organischer Säuren. Diese haben jedoch unter anderem den Nachteil, dass bedingt durch deren basischen Charakter oft ein Abbau von PET während der Herstellung und Verarbeitung erfolgt. Niedermolekulares PET kristallisiert zwar besser, zeigt aber auch deutlich schlechtere mechanische Eigenschaften.

Die DE-A-3810423 offenbart die Verwendung von Bariumsulfat mit definierter Korngröße und aktivierter Oberfläche als Nukleierungsmittel für teilkristalline Polymere. Auch in diesem Fall sind relativ hohe Einsatzmengen von 0,1 bis 50 Gew.-% Bariumsulfat erforderlich.

Die aus dem Stand der Technik bekannten Polymere enthalten somit große Mengen Nukleierungsmittel, um ein gutes Kristallisationsverhalten zu erzielen. Dies hat den Nachteil, dass insbesondere im Fall von Bariumsulfat als Nukleierungsmittel der Kunststoff sehr schwer wird. Außerdem sind größere Mengen an Nukleierungsmittel schwerer in den Kunststoff einzuarbeiten. Darüber hinaus verteuern größere Mengen an Nukleierungsmittel den Kunststoff.

Aufgabe der vorliegenden Erfindung ist es, die Nachteile des Standes der Technik zu beheben.

Insbesondere Aufgabe der vorliegenden Erfindung ist es, einen Kunststoff zur Verfügung zu stellen, der bei einem nur geringem Gehalt an Nukleierungsmittel eine im Vergleich zum ungefüllten Kunststoff deutlich erhöhte Kristallisationstemperatur beim Abkühlen aus der Schmelze aufweist.

Ein solcher Kunststoff ist aus dem Stand der Technik bisher nicht bekannt.

Es wurde überraschend gefunden, dass schon sehr geringe Mengen, beispielsweise von weniger als 0,1 Gew.-%, eines nanoskaligen Bariumsulfats ausreichen, um das Nukleierungsverhalten des Kunststoffes auf der Grundlage von teilkristallinen Polymeren, insbesondere von Thermoplasten, beispielsweise von Polyethylen (PE), Polypropylen (PP), Polyphenylensulfid (PPS), Polyamid (PA 6, PA 66), Polyetheretherketon (PEEK), Polyphthalamid (PPA), Polyetherketonketon (PEKK), Polyoxymethylen (POM), Polybutylenterephthalat (PBT) positiv zu beeinflussen. Als nanoskalig im Sinne der vorliegenden Erfindung werden dabei Materialien bezeichnet, deren Teilchengröße unterhalb von 100 nm liegt. Erfindungsgemäß bevorzugt enthalten die erfindungsgemäßen Kunststoffe Bariumsulfat einer mittleren Teilchengröße d₅₀ von 10 bis 30 nm, jeweils gemessen nach Debye-Scherrer. Der erfindungsgemäße, Bariumsulfat enthaltende Kunststoff hat eine im Vergleich zum ungefüllten Kunststoff deutlich erhöhte Kristallisationstemperatur beim Abkühlen aus der Schmelze. Durch die Erhöhung der Kristallisationstemperatur wird der Kunststoff beim Abkühlen aus der Schmelze früher fest, so dass die Zykluszeiten von Produktionsprozessen verkürzt werden können. Auch die Kristallinität des erfindungsgemäßen Kunststoffes ist im Vergleich zum ungefüllten Kunststoff deutlich erhöht. Darüber hinaus zeichnet sich der erfindungsgemäße Kunststoff durch verbesserte physikalische Eigenschaften wie Transparenz, E-Modul und Schrumpfverhalten aus.

Aufgrund der geringen Teilchengröße kann das Bariumsulfat vorteilhafterweise bereits bei der Polymerisation des jeweiligen Polymers eingesetzt werden. Es muss also nicht nachträglich, beispielsweise durch Extrusion, in den Kunststoff eingebracht werden.

Gegenstand der vorliegenden Erfindung ist im Einzelnen:
- ein Kunststoff, der nanoskaliges Bariumsulfat enthält, wobei der Anteil des Bariumsulfats im fertigen Kunststoff 0,01 bis 0,05 Gew.-% beträgt;
- ein Kunststoff, der nanoskaliges Bariumsulfat enthält, wobei das Bariumsulfat eine mittlere Teilchengröße d₅₀ von 10 bis 30 nm besitzt;
- ein Kunststoff, der nanoskaliges der Bariumsulfat enthält, wobei das Bariumsulfat nicht oberflächenmodifiziert ist;
- ein Kunststoff, der nanoskaliges Bariumsulfat enthält, wobei der Grundbestandteil des Kunststoffs ein teilkristallines Polymer, bevorzugt ein teilkristalliner Thermoplast ist;
- ein Kunststoff, der nanoskaliges Bariumsulfat enthält, wobei es sich bei dem teilkristallinen Polymer um Polyethylen (PE), Polypropylen (PP), Polyphenylensulfid (PPS), Polyamid (PA 6, PA 66), Polyetheretherketon (PEEK), Polyphthalamid (PPA), Polyetherketonketon (PEKK), Polyoxymethylen (POM) oder Polybutylenterephthalat (PBT) handelt;
- ein Kunststoff, der nanoskaliges Bariumsulfat enthält, wobei der Kunststoff Verarbeitungshilfsmittel, vorzugsweise Fließ- und/oder Entformungsmittel, Füll- und Verstärkungsmittel, vorzugsweise Talkum und/oder Kreide, Glasfasern, organische Fasern, Pigmente, vorzugsweise Titandioxid und/oder Ruß, Brandschutzmittel, vorzugsweise Halogenverbindungen und/oder Antimontrioxid, und/oder Stabilisatoren, vorzugsweise niedermolekulare Phosphite, enthält;
- ein Masterbatch zur Herstellung eines Kunststoffs, der nanoskaliges Bariumsulfat enthält;
- ein Masterbatch zur Herstellung eines Kunststoffs, der nanoskaliges Bariumsulfat enthält, wobei das Masterbatch nanoskaliges Bariumsulfat enthält;
- ein Masterbatch zur Herstellung eines Kunststoffs, der nanoskaliges Bariumsulfat enthält, wobei das Masterbatch 5 bis 50 Gew.-% nanoskaliges Bariumsulfat; bevorzugt 15 bis 30 Gew.-% nanoskaliges Bariumsulfat enthält;
- ein Masterbatch zur Herstellung eines Kunststoffs, der nanoskaliges Bariumsulfat enthält, wobei das nanoskalige Bariumsulfat eine mittlere Teilchengröße d₅₀ von bis 30 nm besitzt;
- ein Verfahren zur Herstellung eines Kunststoffs, der nanoskaliges Bariumsulfat enthält;
- ein Verfahren zur Herstellung eines Kunststoffs, der nanoskaliges Bariumsulfat enthält, wobei das nanoskalige Bariumsulfat bereits bei der Polymerisation des Polymers zugesetzt wird;
- ein Verfahren zur Herstellung eines Kunststoffs, der nanoskaliges Bariumsulfat enthält, wobei das nanoskalige Bariumsulfat nach der Polymerisation des Polymers zugesetzt wird;
- ein Verfahren zur Herstellung eines Kunststoffs, der nanoskaliges Bariumsulfat enthält, unter Verwendung eines Masterbatches, wobei das Masterbatch nanoskaliges Bariumsulfat enthält und mittels Schmelzeextrusion so verdünnt wird, dass der resultierende Anteil von nanoskaligem Bariumsulfat im Kunststoff bei 0,01 bis 0,05 Ges.-% liegt;
- die Verwendung von nanoskaligem Bariumsulfat einer mittleren Teilchengröße d₅₀ von 10 bis 30 nm zur Erhöhung der Kristallisationstemperatur von Kunststoffen, gemessen beim Abkühlen aus der Schmelze;
- die Verwendung von nanoskaligem Bariumsulfat einer mittleren Teilchengröße d₅₀ von 10 bis 30 nm zur Erhöhung der Kristallinität von teilkristallinen Kunststoffen;
- die Verwendung von nanoskaligem Bariumsulfat einer mittleren Teilchengröße d₅₀ von 10 bis 30 nm zur Verbesserung der mechanischen Eigenschaften von teilkristallinen Kunststoffen beispielsweise der Transparenz, des E-Moduls und/oder des Schrumpfverhaltens von teilkristallinen Kunststoffen;
- die Verwendung eines Kunststoffs, der nanoskaliges Bariumsulfat enthält, zur Herstellung von Folien, Formkörpern, Halbzeugen oder Fasern;
- die Verwendung eines Kunststoffs, der nanoskaliges Bariumsulfat enthält, im Spritzgussprozess zur Reduzierung der Zykluszeiten;

Die Erfindung wird durch die nachstehenden Beispiele näher erläutert, ohne sie dadurch einzuschränken:

### Beispiel 1: Verwendung von Bariumsulfat zur Herstellung eines Kunststoffes auf der Grundlage von PA 6

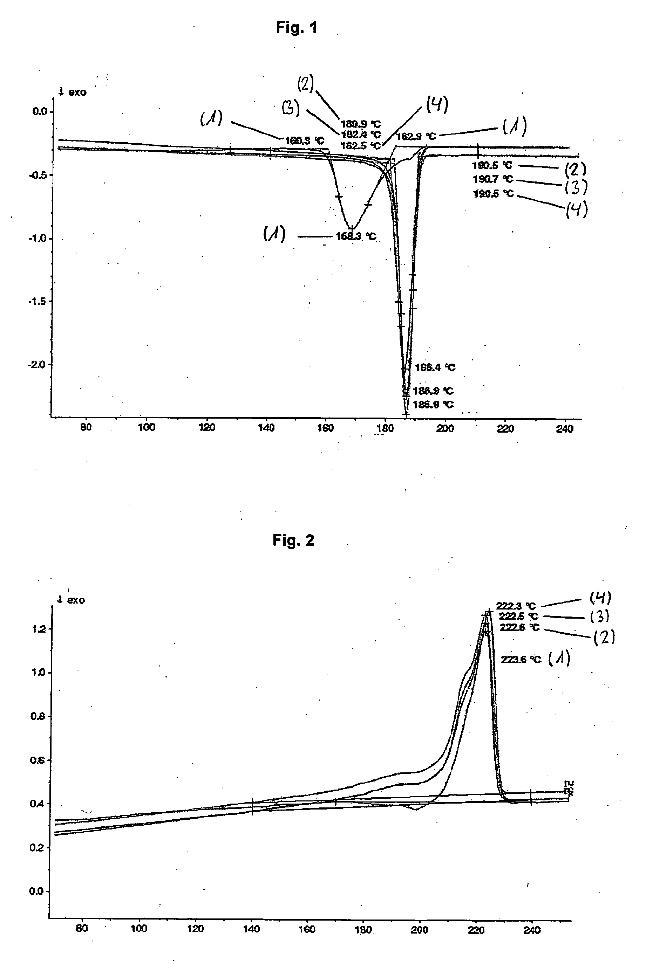

Es wurde ein nanoskaliges Bariumsulfat verwendet, das sich durch eine spezifische Oberfläche von ca. 60 m²/g und eine mittlere Teilchengröße d₅₀ von ca. 25 nm auszeichnet. Zunächst wurde unter Verwendung einer geeigneten Dispergierschnecke ein Masterbatch aus dem oben genannten Bariumsulfat und einem Rohpolymer (Polyamid 6, Ultramide B2745) hergestellt. Im zweiten Verfahrensschritt wurde der Masterbatches auf die gewünschten Gehalte an Bariumsulfat von 0,01 Gew.-%, 0,05 Gew.-% und 0,10 Gew.-% verdünnt. Das Kristallisationsverhalten dieser Kunststoffe wurde im Vergleich zum Rohpolymer mittels DSC (Differential Scanning Caloremetry) vermessen. Die Ergebnisse sind in den Fig. 1 und 2 und der Tabelle 1 zusammengefasst. Im Vergleich zum Rohpolymer besitzen die mit nanoskaligem Bariumsulfat gefüllten Kunststoffe eine um ca. 18 °C erhöhte Kristallisationstemperatur. Zudem liegt die Kristallinität der gefüllten Kunststoffe mit 41,4 bis 44,5 % deutlich höher als die Kristallinität des Rohpolymers, die 27,6 % beträgt.
Fig. 1: DSC-Messungen, Abkühlkurve (Abkühlrate 10 K/min)
Abszisse: (mW/mg), exo
Ordinate: Temperatur / °C
   (1) PA6 Rohpolymer
   (2) PA6 + 0,01 Ges.-% Bariumsulfat
   (3) PA6 + 0,05 Gew.-% Bariumsulfat
   (4) PA6 + 0,10 Ges.-% Bariumsulfat

Fig. 2: DSC-Messungen, Aufheizkurve (nach Abkühlung mit 10 K/min)
Abszisse: (mW/mg), exo
Ordinate: Temperatur / °C
   (1) PA6 Rohpolymer
   (2) PA6 + 0,01 Gew.-% Bariumsulfat
   (3) PA6 + 0,05 Gew.-% Bariumsulfat
   (4) PA6 + 0,10 Gew.-% Bariumsulfat

**Tabelle 1: Ergebnisse der DSC-Messungen**

| Probe | Füllgrad [Gew.%] | TCC [°C] | Kristallinitätsgrad [%] |
|---|---|---|---|
| PA6 Rohpolymer | 0,00 | 168,3 | 27,6 |
| PA6 + Bariumsulfat | 0,01 | 186,4 | 41,4 |
| PA6 + Bariumsulfat | 0,05 | 186,9 | 42,0 |
| PA6 + Bariumsulfat | 0,05 | 186,9 | 44,5 |

## Patentansprüche

1. Verfahren zur Herstellung eines Kunststoffs, dessen Grundbestandteil ein Polymer oder ein Gemisch aus mindestens zwei Polymeren ist, wobei es sich um ein teilkristallines Polymer, bevorzugt ein teilkristalliner Thermoplast, ausgewählt aus Polyethylen (PE), Polypropylen (PP), Polyphenylensulfid (PPS), Polyamid (PA 6, PA 66), Polyetheretherketon (PEEK), Polyphthalamid (PPA), Polyetherketonketon (PEKK), Polyoxymethylen (POM) oder Polybutylenterephthalat (PBT) handelt und der nanoskaliges Bariumsulfat enthält, **dadurch gekennzeichnet, dass** das nanoskalige Bariumsulfat, welches nicht oberflächenmodifiziert ist und eine mittlere Teilchengröße d₅₀ von 10 bis 30 nm besitzt, bei der Polymerisation des Polymers oder nach der Polymerisation des Polymers in einer Menge zugesetzt wird, dass der Anteil des nanoskaligen Bariumsulfats im fertigen Kunststoff 0,01 bis 0,05 Gew.-% beträgt.

2. Verfahren nach Anspruch 1, **dadurch gekennzeichnet, dass** ein Masterbatch verwendet wird, wobei das Masterbatch nanoskaliges Bariumsulfat enthält und mittels Schmelzeextrusion so verdünnt wird, dass der resultierende Anteil von nanoskaligem Bariumsulfat im Kunststoff bei 0,01 bis 0,05 Gew.-% liegt.

3. Verfahren nach Anspruch 1 oder 2, **dadurch gekennzeichnet, dass** dem Kunststoff Verarbeitungshilfsmittel, vorzugsweise Fließ- und/oder Entformungsmittel, Füll- und Verstärkungsmittel, vorzugsweise Talkum und/oder Kreide, Glasfasern, organische Fasern, Pigmente, vorzugsweise Titandioxid und/oder Ruß, Brandschutzmittel, vorzugsweise Halogenverbindungen und/oder Antimontrioxid, und/oder Stabilisatoren, vorzugsweise niedermolekulare Phosphite, zugesetzt werden.

4. Verwendung eines Kunststoffs erhalten nach einem oder mehreren der Ansprüche 1 bis 3 zur Herstellung von Folien, Formkörpern, Halbzeugen oder Fasern;

5. Verwendung eines Kunststoffs erhalten nach einem oder mehreren der Ansprüche 1 bis 3 im Spritzgussprozess zur Reduzierung der Zykluszeiten;

## Claims

1. Method for producing a plastic, whose basic constituent is a polymer or a mixture of at least two polymers, wherein this is a partially crystalline polymer, preferably a partially crystalline thermoplastic, selected from polyethylene (PE), polypropylene (PP), polyphenylene sulfide (PPS), polyamide (PA 6, PA 66), polyether ether ketone (PEEK), polyphthalamide (PPA), polyether ketone ketone (PEKK), polyoxymethylene (POM) or polybutylene terephthalate (PBT), and which contains nanoscale barium sulphate, **characterised in that** the nanoscale barium sulphate, which is not surface-modified and has an average particle size d₅₀ of 10 to 30 nm, is added during polymerisation of the polymer or after polymerisation of the polymer in such a quantity that the content of nanoscale barium sulfate in the finished plastic is 0.01 to 0.05 wt.%.

2. Method according to claim 1, **characterised in that** a masterbatch is used, wherein the masterbatch contains nanoscale barium sulphate and is diluted by means of melt extrusion in such a way that the resulting proportion of nanoscale barium sulfate in the plastic is 0.01 to 0.05 wt.%.

3. Method according to claim 1 or 2, **characterised in that** processing aids, preferably flow control agents and/or release agents, fillers and reinforcing agents, preferably talc and/or chalk, glass fibres, organic fibres, pigments, preferably titanium dioxide and/or carbon black, fire retardants, preferably halogen compounds and/or antimony trioxide, and/or stabilisers, preferably low-molecular-weight phosphites, are added to the plastic.

4. Use of a plastic obtained according to one or more of claims 1 to 3 to produce films, moulded articles, semifinished products or fibres.

5. Use of a plastic obtained according to one or more of claims 1 to 3 in injection moulding to reduce cycle times.

## Revendications

1. Procédé de fabrication d'une matière de synthèse dont la partie constitutive de base est un polymère ou un mélange d'au moins deux polymères, dans lequel il s'agit d'un polymère partiellement cristallin, de préférence d'une matière thermoplastique partiellement cristalline, choisi parmi le polyéthylène (PE), le polypropylène (PP), le poly(sulfure de phénylène) (PPS), le polyamide (PA6, PA66), le polyéther cétone-cétone (PEEK), le polypthtalamide (PPA), le polyester cétone (PEKK), le polyoxyméthylène (POM) ou le poly(téréphtalate de butylène) (PBT) et qui contient du sulfate de baryum du type à l'échelle nanoscopique, **caractérisé en ce que** le sulfate de baryum du type à l'échelle nanoscopique, lequel n'est pas modifié en surface et présente une dimension moyenne des particules d50 comprise entre 10 et 30 nm et est ajouté lors de la polymérisation du polymère ou après la polymérisation de polymère, en une quantité telle que la proportion du sulfate de baryum à l'échelle nanoscopique dans la matière de synthèse terminée se situe entre 0,01 et 0,05 % en poids.

2. Procédé selon la revendication 1 **caractérisé en ce que** l'on utilise un lot de base, lequel lot de base contient du sulfate de baryum du type à l'échelle nanoscopique et est dilué en exécutant une extrusion de matière fondue de telle manière que la proportion de sulfate de baryum qui en résulte dans la matière de synthèse se situe entre 0,01 et 0,05 % en poids.

3. Procédé selon la revendication 1 ou 2 **caractérisé en ce que** des auxiliaires de mise en oeuvre, de préférence des additifs favorisant l'écoulement et/ou des additifs de démoulage, des additifs constituant des charges ou des renforcements, de préférence du talc et/ou de la craie, des fibres de verre, des fibres organiques, des pigments, de préférence du dioxyde de titane et/ou de l'oxyde de fer, des agents de protection contre l'incendie, de préférence des composés halogéniques et/ou du trioxyde d'antimoine et/ou des stabilisateurs, de préférence des phosphites à bas poids moléculaire, sont ajoutés à la matière de synthèse.

4. Utilisation d'une matière de synthèse obtenue selon une ou plusieurs des revendications 1 à 3 pour la fabrication de feuilles minces, de corps façonnés, de semi-produits ou de fibres.

5. Utilisation d'une matière de synthèse obtenue selon une ou plusieurs des revendications 1 à 3 dans le processus de moulage par injection en vue de réduire la durée des cycles.
